# EUROPÄISCHE PATENTSCHRIFT

(11) **EP 3 283 412 B1**
(45) Veröffentlichungstag und Bekanntmachung des Hinweises auf die Patenterteilung: **07.05.2025**
(21) Anmeldenummer: 16708998.6
(22) Anmeldetag: 07.03.2016
(51) Int. Cl.: B65G 43/10, B65G 47/26, B65G 47/31

(54) **VERFAHREN UND TRANSPORTSYSTEM ZUM STEUERN EINES BEHÄLTERSTROMS**
METHOD AND TRANSPORT SYSTEM FOR CONTROLLING A CONTAINER FLOW
PROCÉDÉ ET SYSTÈME DE TRANSPORT DE COMMANDE D'UN FLUX DE RÉCIPIENTS

(30) Priorität: 15.04.2015 DE 102015206695
(43) Veröffentlichungstag der Anmeldung: 21.02.2018
(73) Patentinhaber: Krones AG, 93073 Neutraubling (DE)
(72) Erfinder: VIERHEILIG, Johannes, 93073 Neutraubling (DE); WAETZOLD, Juergen, 93073 Neutraubling (DE)
(74) Vertreter: Grünecker Patent- und Rechtsanwälte PartG mbB
(86) Internationale Anmeldenummer: PCT/EP2016/054749
(87) Internationale Veröffentlichungsnummer: WO 2016/165876

(56) Entgegenhaltungen:
- EP-A1- 0 422 635
- EP-A1- 1 388 505
- EP-A1- 2 522 602
- EP-A1- 2 805 900
- WO-A1-2006/014103
- DE-A1- 102004 035 821
- DE-A1- 3 621 601
- JP-A- 2001 225 301
- JP-A- 2006 111 406
- JP-A- 2012 071 970
- JP-A- 2012 210 998
- JP-A- H02 188 311
- JP-A- S 552 521
- US-A1- 2004 112 713

## Beschreibung

Die Erfindung betrifft ein Verfahren zum Steuern eines Behälterstroms und ein Transportsystem zum Durchführen des Verfahrens.

Es ist bekannt, Gegenstände in Produktionsanlagen auf miteinander verketteten Transporteuren zu fördern sowie den Abstand zwischen den Gegenständen zu überwachen und durch getrennte Ansteuerung einzelner Transporteure gezielt zu verändern, um die Gegenstände mit möglichst einheitlichem Abstand einer stromabwärts angeordneten Produktionsmaschine zuzuführen. Hierzu beschreibt beispielsweise die DE 10 2004 035 821 A1 mehrere hintereinander angeordnete Förderbänder, zwischen denen jeweils eine Lücke ausgebildet ist. Über die Förderbänder werden längliche Gegenstände transportiert, die zumindest länger sind als die Lücken zwischen den Transporteuren. Um die Abstände zwischen den einzelnen Produkten einzustellen, werden jeweils einzelne Transporteure gezielt beschleunigt, solange sich auf diesen jeweils nur ein Produkt befindet. Fördersysteme mit in Reihe geschalteten Förderbändern, deren Geschwindigkeit sich unabhängig voneinander einstellen lässt, sind ferner aus der DE 3 621 601 A1 und der EP 1 280 720 B1 bekannt. JP 2012 210998 A offenbart ein Verfahren zum Steuern eines Behälterstroms, mit den Schritten: a) Kontinuierlicher Transport von Behältern ohne Staudruck auf mittels Überschüben aneinander gereihten Transporteuren, die im Bereich der Überschübe nebeneinander verlaufen oder nicht überlappend in Reihe aufeinander folgen; b) Überwachen des Behälterstroms mit Sensoren hinsichtlich des Erkennen eines umgefallenen Behälter bzw. zur Synchronisierung eines Etikettenzufuhr oder zum Überwachen eines Mindestrückstau vor einer stromaufwärts Einteilschnecke; c) Individuelle Ansteuerung der Transporteure zur selektiven Beschleunigung von Behältern, d) Vorübergehende gemeinsame Erhöhung der Transportgeschwindigkeiten von wenigstens zwei der Transporteure, wobei der Schritt d) nach dem Schritt c) ausgeführt wird, wobei unter einer gemeinsamen Erhöhung der Transportgeschwindigkeiten zu verstehen ist, dass die Transporteure gleichzeitig eine gegenüber einer Grundgeschwindigkeit erhöhte Transportgeschwindigkeit aufweisen, wobei die Transporteure dabei nicht zwangsläufig mit derselben Transportgeschwindigkeit laufen müssen.

In Getränkeabfüllanlangen oder dergleichen werden seriell miteinander verkettete Transporteure insbesondere auch dazu verwendet, stromaufwärts der Transporteure vorhandene Maschinen mit einer Ausleitfunktion für Behälter blockartig mit einer stromabwärts der Transporteure angeordneten Führungsmaschine zu koppeln. Die Transporteure fördern die ordnungsgemäßen Behälter dann ohne Staudruck beispielsweise in einen am Einlauf der Führungsmaschine ausgebildeten Staudruckbereich. Die mittlere Arbeits- und Fördergeschwindigkeit eines derartigen Maschinenblocks wird dann durch die Führungsmaschine vorgegeben. Bei der Maschine mit einer Ausleitfunktion handelt es sich beispielsweise um einen Leerflascheninspektor, einen Vollflascheninspektor, einen Flaschensortierer, ein System zum Verteilen von Flaschen, eine Einheit zum Austragen von Scherben oder liegenden Behälter oder dergleichen. Bei der Führungsmaschine handelt es sich beispielsweise um einen Füller, eine Etikettiermaschine oder eine sonstige Rundläufermaschine mit einbahnigem Behältereinlauf.

Aufgrund der Ausleitfunktion der stromaufwärts angeordneten Maschine ergeben sich zwangsläufig Lücken im Behälterstrom. Um einen kontinuierlichen Betrieb der Führungsmaschine zu gewährleisten, müssen die stromaufwärts verursachten Lücken durch eine vorübergehende Erhöhung der Arbeitsgeschwindigkeit der ausleitenden Maschine und eine Erhöhung der Transportgeschwindigkeit der zwischengeschalteten Transporteure aufgeholt werden. Hierzu ist es bekannt, den Bereich der Transporteure beispielsweise hinsichtlich korrekturbedürftiger Lücken zu überwachen und alle Transporteure stromaufwärts einer erkannten Lücke gemeinsam mit der ausleitenden Maschine zu beschleunigen, um die Lücke zumindest zu verkleinern. Dies wird bei nur partiellem Lückenschluss gegebenenfalls an wenigstens einem stromabwärts folgenden Transporteur wiederholt.

Nachteilig bei diesem prinzipiell zum Lückenschluss geeigneten Verfahren ist, dass die ausleitende Maschine bei jedem dieser Teilschritte kurzzeitig vergleichsweise stark beschleunigt wird und anschließend wieder auf ihre normale Grundgeschwindigkeit zurückkehrt. Diese Wechsel erfolgen jeweils mit vergleichsweise starkem Geschwindigkeitshub. Daraus resultiert ein unruhiger Betrieb der ausleitenden Maschine. Ferner wird die Geschwindigkeitsanpassung dieser Maschine an ihre Ausleitrate und die Arbeitsgeschwindigkeit der Führungsmaschine stark eingeschränkt. Zudem erfordert der Geschwindigkeitshub eine entsprechende große Überkapazität der Maschine gegenüber ihrer Grundgeschwindigkeit. Alternativ muss die maximale Ausleitrate der Maschine eingeschränkt werden.

Es wäre demgegenüber wünschenswert, die ausleitende Maschine gleichmäßiger betreiben zu können, um den Produktstrom insgesamt ruhiger fließen zu lassen, um benötigte Überkapazitäten gegenüber dem normalen Grundbetrieb der Maschine zu reduzieren und/ oder um diese Maschine besser an die erforderlichen Ausleitraten und/ oder die von einer Führungsmaschine vorgegebene Arbeitsgeschwindigkeit anpassen zu können.

Die gestellte Aufgabe wird mit einem Verfahren nach Anspruch 1 gelöst. Demnach dient dieses zum Steuern eines Behälterstroms und umfasst folgende Schritte:
a) Kontinuierlicher Transport von Behältern ohne Staudruck auf mittels Überschüben aneinander gereihten Transporteuren, die im Bereich der Überschübe nebeneinander verlaufen oder nicht überlappend in Reihe aufeinander folgen;
b) Überwachen des Behälterstroms mit berührungslosen Sensoren hinsichtlich des Auftretens korrekturbedürftiger Lücken zwischen benachbarten Behältern, wobei unter die korrektbedürftigen Lücken Abstände zwischen den Behältern zu verstehen ist, die einen vorgebenen Maximalwert überschreiten;
c) Individuelle Ansteuerung der Transporteure zur selektiven Beschleunigung von Behältern, die einer im Schritt b) als korrekturbedürftig erkannten Lücke nachlaufen, so dass die erkannte Lücke verkleinert wird und dabei hinter den Behältern wenigstens eine kompensatorische Lücke entsteht; und
d) Vorübergehende gemeinsame Erhöhung der Transportgeschwindigkeiten von wenigstens zwei der Transporteure, wobei der Schritt d) nach dem Schritt c) ausgeführt wird, wobei unter einer gemeinsamen Erhöhung der Transportgeschwindigkeiten zu verstehen ist, dass die Transporteure gleichzeitig eine gegenüber einer Grundgeschwindigkeit erhöhte Transportgeschwindigkeit aufweisen, wobei die Transporteure dabei nicht zwangsläufig mit derselben Transportgeschwindigkeit laufen müssen; und wobei die Transportgeschwindigkeiten im Schritt d) gemeinsam mit der Arbeitsgeschwindigkeit einer die Lücken verursachenden Maschine erhöht werden.

Dadurch, dass der Schritt d) erst nach dem Schritt c) ausgeführt wird, kann der Geschwindigkeitshub im Schritt d) für eine Aufholbewegung der Behälter zum vollständigen Lückenschluss stromabwärts der Transporteure reduziert werden.

Die korrekturbedürftige Lücke wird auf wenigstens eine demgegenüber kleinere Lücke und die kompensatorische Lücke aufgeteilt. Vorzugsweise wird die ursprüngliche Lücke somit auf mehrere Bereiche im Behälterstrom verteilt. Eine abschließende gemeinsame Beschleunigung der Behälter stromaufwärts der ursprünglichen Lücke ist dann einschließlich der ausleitenden Maschine auf mehreren Transporteuren gleichzeitig und mit vergleichsweise geringem Geschwindigkeitshub möglich. Daraus resultieren ein insgesamt gleichmäßigerer Transport der Behälter sowie eine verbesserte Auslastung und Steuerung der ausleitenden Maschine.

Im Bereich der Überschübe verlaufen die Transporteure nebeneinander, so dass die Behälter dort beispielsweise an Führungsgeländern entlang laufend von einem Transporteur auf den nächsten wechseln, oder nicht überlappend in Reihe aufeinander folgen.

Der Behälterstrom wird erfindungsgemäß mit berührungslosen Sensoren abgetastet, insbesondere mit optischen Sensoren, wie beispielsweise Lichtschranken. Lücken werden anhand dabei zwischen den Behältern gemessener Abstände erkannt. Gemäß der Erfindung sind korrekturbedürftigen Lücken Abstände zwischen den Behältern zu verstehen, die einen vorgegebenen Maximalwert überschreiten.

Unter einer individuellen Ansteuerung der Transporteure ist gemäß der Erfindung zu verstehen, dass diese gleichzeitig oder zeitlich überlappend auf unterschiedliche Transportgeschwindigkeiten beschleunigt werden können. Unter einer gemeinsamen Erhöhung der Transportgeschwindigkeiten ist zu verstehen, dass die Transporteure gleichzeitig eine gegenüber einer Grundgeschwindigkeit erhöhte Transportgeschwindigkeit aufweisen, wobei die Transporteure dabei nicht zwangsläufig mit derselben Transportgeschwindigkeit laufen müssen.

Erfindungsgemäß werden die Transportgeschwindigkeiten im Schritt d) gemeinsam mit der Arbeitsgeschwindigkeit einer die Lücken verursachenden Maschine erhöht. Somit ist der gegenüber einem Lückenschluss ohne Erzeugung kompensatorischer Lücken reduzierte Geschwindigkeitshub auch in der die Lücken verursachenden Maschine wirksam.

Somit kann die für eine Aufholbewegung von Behältern nötige Überkapazität der Maschine reduziert werden. Es resultiert ein insgesamt gleichmäßigerer Betrieb der die Lücken verursachenden Maschine. Ferner kann die für einen ordnungsgemäßen Betrieb zulässige Ausleitrate der Maschine angehoben werden. Die die Lücken verursachende Maschine ist stromaufwärts der Transporteure ausgebildet oder ein eingangsseitiger Transporteur des Transportsystems ist als Ausleittransporteur der die Lücken verursachenden Maschine ausgebildet. Die Maschine verursacht die Lücken im Behälterstrom durch Ausleiten fehlerhafter Behälter oder dergleichen und wird daher alternativ auch als ausleitende Maschine bezeichnet.

Vorzugsweise wird die Arbeitsgeschwindigkeit der ausleitenden Maschine gegenüber einer Grundgeschwindigkeit erhöht, die an eine aktuelle oder gemittelte Ausleitrate der Maschine angepasst ist. Dies vereinfacht die Steuerung der ausleitenden Maschine, insbesondere zu Anpassung an die Arbeitsgeschwindigkeit einer stromabwärts ausgebildeten Führungsmaschine.

Vorzugsweise werden die Behälter im Schritt a) auf wenigstens zwei, insbesondere drei, unterschiedlich langen Transporteuren transportiert. Dadurch werden kompensatorische Lücken bei einem wiederholten partiellen Lückenschluss gegeneinander im Behälterstrom versetzt. Anders gesagt, wird dadurch eine ungewollte Vergrößerung von Lücken durch Überlagerung kompensatorisch erzeugter Lücken beim Beschleunigen einzelner Transporteure vermieden. Die Längen benachbarter Transporteure unterscheiden sich vorzugsweise um wenigstens 15 Prozent voneinander.

Vorzugsweise unterscheiden sich die maximalen Transportgeschwindigkeiten der Transporteure im Schritt c) um 5 bis 50 Prozent voneinander. Dies ermöglicht die Erzeugung ausreichend großer kompensatorischer Lücken an wenigstens zwei Überschüben und vermeidet eine zu große Beschleunigung am Übergang zwischen zwei benachbarten Transporteuren. Dies beugt einem unerwünschten Umfallen der Behälter an den Überschüben vor.

Vorzugsweise werden die Transportgeschwindigkeiten im Schritt c) zur zeitlich überlappenden Verkleinerung von wenigstens zwei erkannten Lücken auf einen vorgegebenen Maximalwert begrenzt. Dadurch wird vermieden, dass sich Beschleunigungen zum Verkleinern einer erkannten Lücke und zum Erzeugen kompensatorischer Lücken im Bereich eines bestimmten Überschubs auf unzulässige Werte addieren. Eine derartige Überlappung kann sich beispielsweise ergeben, wenn während eines partiellen Lückenschlusses durch Verkleinerung einer ersten Lücke, beispielsweise im Bereich eines zweiten und dritten Transporteurs, eine zweite korrekturbedürftige Lücke im Bereich des ersten Transporteurs festgestellt und verkleinert wird.

Vorzugsweise wird der Behälterstrom einem an die Transporteure anschließenden Staudruckbereich im Einlauf einer Führungsmaschine zugeführt. Der Behälterstrom wird somit ohne Staudruck durch möglichst gleichmäßige Verteilung der Lücken vereinheitlicht und derart in den Staudruckbereich eingeleitet. Somit kann der mit dem gleichmäßig verteilten Lücken ausgebildete Behälterstrom unter vergleichsweise geringer Anhebung der Transportgeschwindigkeiten mehrerer Transporteure über einen entsprechend langen Zeitraum gleichmäßiger in den Staudruckbereich gefördert werden, als dies ohne die Erzeugung kompensatorischer Lücken möglich wäre.

Vorzugsweise wird der Schritt d) vom Eintreffen der im Schritt c) verkleinerten Lücke am Staudruckbereich ausgelöst. Somit kann die ursprünglich vorhandene korrekturbedürftige Lücke über die vorhandenen Transporteure, also den insgesamt zur Verfügung stehenden staudrucklosen Bereich, verteilt werden, bevor die Geschwindigkeitsanhebung, insbesondere unter Einbeziehen der ausleitenden Maschine, ausgelöst wird. Dadurch wird der Geschwindigkeitshub für eine Aufholbewegung stromaufwärts des Staudruckbereichs minimiert.

Vorzugsweise werden im Schritt b) Abstände zwischen den Behältern in Einlaufbereichen der Überschübe gemessen, und Lücken werden ab einem vorgegebenen maximalen Abstand als korrekturbedürftig klassifiziert. In besonders vorteilhafter Weise wird der Behälterstrom zur Lückenerkennung in einem Abstand vor dem jeweiligen Überschub abgetastet, der dem als korrekturbedürftig festgelegten Abstand entspricht oder von letzterem um nicht mehr als 20% abweicht. Die Messung der Abstände und die Klassifizierung der Lücken erfolgt vorzugsweise an allen Überschüben, denen ein separat steuerbarer Transporteur nachgeschaltet ist.

Vorzugsweise verläuft der Behälterstrom wenigstens über einen ersten Überschub von einem ersten zu einem zweiten Transporteur und über einen zweiten Überschub von dem zweiten zu einem dritten Transporteur. Ferner wird der Behälterstrom dann wenigstens am zweiten Überschub zum Erkennen der korrekturbedürftigen Lücken überwacht. Im Schritt c) laufen dann der erste und der zweite Transporteur vorübergehend schneller als der dritte Transporteur, und der zweite Transporteur läuft vorübergehend schneller als der erste Transporteur. Dadurch ergibt sich bei kontinuierlichem Betrieb der Transporteure eine Verkleinerung der festgestellten Lücke am zweiten Überschub unter Erzeugung einer kompensatorischen Lücke am ersten Überschub.

Vorzugsweise wird der Behälterstrom ferner am ersten Überschub zum Erkennen korrekturbedürftiger Lücken überwacht, und der erste Transporteur läuft im Schritt c) vorübergehend schneller als der zweite Transporteur. Es kann dann zeitlich aufeinander folgend eine Verkleinerung einer weiteren festgestellten Lücke durchgeführt werden.

Die gestellte Aufgabe wird ebenso mit einem Transportsystem nach Anspruch 11 gelöst, das zum Durchführen des Verfahrens nach wenigstens einer der vorigen Ausgestaltungen ausgebildet ist und umfasst:
- einen staudrucklosen Transportabschnitt umfassend mittels Überschub verbundene Transporteure;
- eine an wenigstens einem Überschub ausgebildete Überwachungseinrichtung zum Erkennen korrekturbedürftiger Lücken im Behälterstrom; und
- eine Steuereinheit zum Steuern der Transportgeschwindigkeiten der Transporteure. Erfindungsgemäß weisen wenigstens zwei der Transporteure unterschiedliche Längen auf.

Festgestellte Lücken können im Bereich des Überschubs verkleinert werden bei gleichzeitiger Erzeugung wenigstens einer kompensatorischen Lücke im Bereich eines weiteren stromaufwärts davon ausgebildeten Überschubs. Festgestellte Lücken lassen sich somit im Behälterstrom auf mehrere Lücken verteilen. Dadurch können anschließende Aufholbewegungen des Transportsystems für einen Lückenschluss im Bereich einer stromabwärts ausgebildeten Führungsmaschine mit geringerem Geschwindigkeitshub durchgeführt werden.

Nacheinander erzeugte kompensatorische Lücken sind aufgrund der unterschiedlichen Längen der Transporteure zueinander im Behälterstrom versetzt. Unerwünschte Überlagerungen von Lücken, insbesondere ein Erzeugen kompensatorischer Lücken, die größer sind als die ursprünglich festgestellten Lücken, lassen sich dadurch vermeiden. Das Längenverhältnis zwischen dem längsten und dem kürzesten Transporteur beträgt beispielsweise 1,2 bis 1,8. Geeignete Längenverhältnisse einer Dreiergruppe von Transporteuren sind beispielsweise 6 zu 5 zu 4.

Vorzugsweise ist die Steuereinheit dazu ausgebildet, die Transporteure unterschiedlicher Länge zeitlich zumindest überlappend mit unterschiedlichen Transportgeschwindigkeiten laufen zu lassen. Dies erfolgt während eines im Wesentlichen kontinuierlichen Betriebs der Transporteure, also ohne Stillstand einzelner Transporteure. Sukzessiver Lückenschluss und kompensatorische Lückenbildung werden somit bei hoher Maschinenleistung und geringem Risiko für ein Umfallen der Behälter ermöglicht.

Besonders vorteilhaft ist ein staudruckloser Transportabschnitt mit wenigstens drei Transporteuren und wenigstens zwei die Transporteure verbindenden Überschüben. Es ist dann wenigstens am ausgangsseitigen Überschub eine Überwachungseinrichtung zum Erkennen korrekturbedürftiger Lücken im Behälterstrom ausgebildet. Vorzugsweise umfasst das Transportsystem dann wenigstens drei aufeinander folgende Transporteure unterschiedlicher Länge. Besonders vorteilhaft ist ein Transportsystem, bei dem drei unterschiedlich lange Transporteure derart steuerbar sind, dass sie gleichzeitig mit unterschiedlichen Transportgeschwindigkeiten laufen.

Vorzugsweise ist der erste bzw. eingangsseitige Transporteur ein Auslauftransporteur einer die Lücken verursachenden bzw. einer ausleitenden Maschine. Dadurch lässt sich das Transportsystem besonders kompakt ausbilden. Der Geschwindigkeitshub des eingangsseitigen Transporteurs ist dann an die Steuerung der ausleitenden Maschine anzupassen.

Die gestellte Aufgabe wird ebenso mit einem Maschinenblock gelöst, der das Transportsystem nach einer der vorigen Ausführungsformen umfasst sowie eine die Lücken verursachende Maschine stromaufwärts des Transportsystems und eine Führungsmaschine mit einem eingangsseitigen Staudruckbereich stromabwärts des Transportsystems. In einem Maschinenblock sind Maschinen mittels Transportsystemen fest miteinander verbunden, so dass im Behälterstrom auftretende Lücken für den kontinuierlichen Betrieb einer stromabwärts ausgebildeten Führungsmaschine durch vorübergehende Beschleunigung nachlaufender Behälter in einen Staudruckbereich geschlossen werden müssen. Das Transportsystem führt dann definitionsgemäß eine Aufholbewegung im Behälterstrom durch.

Eine bevorzugte Ausführungsform der Erfindung ist in den Zeichnungen dargestellt. Es zeigen:
- Figur 1: einen Behälterstrom durch ein erfindungsgemäßes Transportsystem beim Verkürzen einer korrekturbedürftigen Lücke an einem ersten Überschub;
- Figur 2: den Behälterstrom nach partiellem Lückenschluss und Erzeugen einer ersten kompensatorischen Lücke;
- Figur 3: einen weiteren partiellen Lückenschluss im Bereich eines zweiten Überschubs;
- Figur 4: den Behälterstrom nach dem weiteren partiellen Lückenschluss und Erzeugen einer zweiten kompensatorischen Lücke;
- Figur 5: einen weiteren partiellen Lückenschluss im Bereich eines dritten Überschubs;
- Figur 6: den Behälterstrom mit dabei erzeugten weiteren kompensatorischen Lücken;
- Figur 7: den Behälterstrom beim Auslösen einer Aufholbewegung für den vollständigen Lückenschluss; und
- Figur 8: die Erzeugung kompensatorischer Lücken an Überschüben zwischen Transporteuren unterschiedlicher Längen.

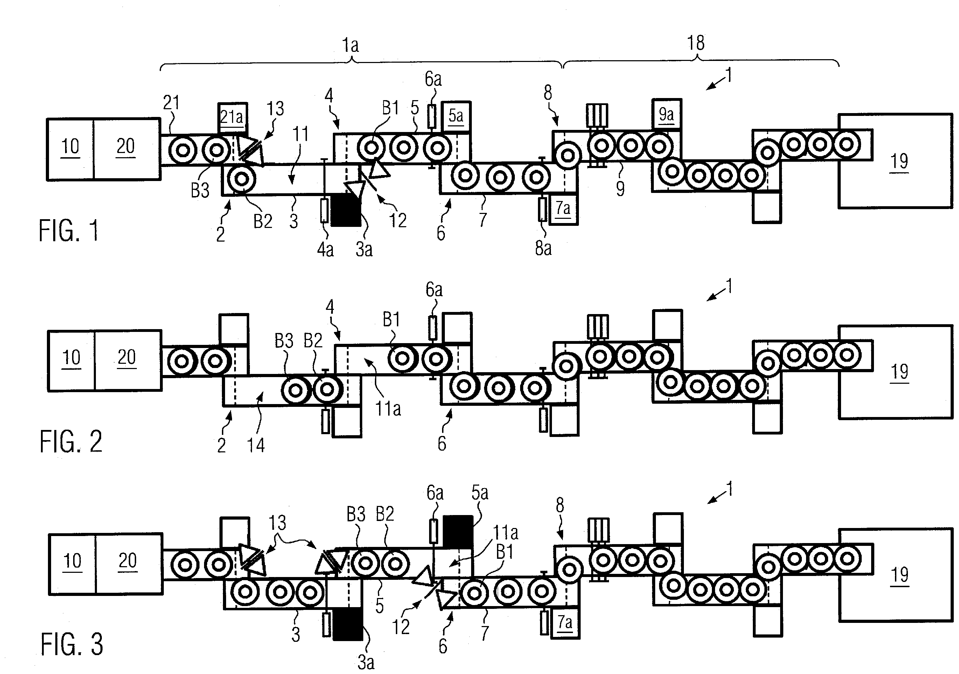

Wie die Fig. 1 in schematischer Darstellung erkennen lässt, umfasst das erfindungsgemäße Transportsystem 1 in einer bevorzugten Ausführungsform einen staudrucklosen Transportabschnitt 1a mit Überschüben 2, 4, 6, 8 am Übergang zu Transporteuren 3, 5, 7, 9, die jeweils für den Transport von Behältern B ohne Staudruck ausgebildet sind. Die Überschübe 2, 4, 6, 8 leiten die Behälter B beispielsweise mittels Führungsgeländer oder dergleichen (nicht dargestellt) in an sich bekannter Weise auf den jeweils seitlich stromabwärts anschließenden Transporteur. Die Transporteure 3, 5, 7, 9 sind von Antriebsmotoren 3a, 5a, 7a, 9a angetrieben und mittels einer schematisch angedeuteten Steuereinheit 10 separat steuerbar.

Eingangsseitig sind an den Überschüben 4, 6, 8 jeweils berührungslos arbeitende Überwachungseinheiten 4a, 6a, 8a, beispielsweise in Form von Lichtschranken, vorhanden. Die Überwachungseinheiten 4a, 6a, 8a messen Abstände zwischen den im Behälterstrom laufenden Behältern B, um korrekturbedürftige Lücken 11 im Behälterstrom zu identifizieren.

Nachfolgend wird beispielhaft beschrieben, wie eine zu korrigierende Lücke 11 durch wiederholte Lückenverkürzung 12 sukzessive verkleinert und dabei unter kompensatorischer Lückenbildung 13 beim kontinuierlichen Weitertransport im Bereich der Überschübe 2, 4, 6, 8 auf mehrere kompensatorische Lücken 14 bis 17 verteilt wird. Die Lücken sind in den Figuren nicht maßstäblich dargestellt. Gegenüber einer Grundgeschwindigkeit des Transportsystems 1 vorübergehend beschleunigte Antriebskomponenten sind der Übersichtlichkeit halber mit schwarzer Füllung dargestellt.

Im Anschluss an den staudrucklosen Abschnitt 1a ist ein Staudruckbereich 18 ausgebildet, für den Einlauf der Behälter B zu einer stromabwärts des Transportsystems 1 ausgebildeten Führungsmaschine 19. Die Führungsmaschine 19 erhält den Behälterstrom als lückenlose Aneinanderreihung der Behälter B.

In der Figur 1 ist ferner stromaufwärts des Transportsystems 1 eine mit diesem verblockte Maschine 20 dargestellt, die die Lücken 11 durch Ausleiten fehlerhafter Behälter oder dergleichen aus dem Behälterstrom erzeugt. Der Lücken 11 erzeugenden bzw. der ausleitenden Maschine 20 ist ein Auslauftransporteur 21 mit einem separaten Antriebsmotor 21a zugeordnet, der die Behälter B über einen eingangsseitigen Überschub 2 an den ersten Transporteur 3 übergibt.

In den Figuren sind Lückenverkürzungen 12 durch aufeinander zu weisende Blockpfeile gekennzeichnet. Kompensatorische Lückenbildungen 13 sind durch voneinander wegweisende Blockpfeile im Bereich der jeweiligen Überschübe gekennzeichnet.

Die Figur 1 zeigt im Bereich des ersten Transporteurs 3 und eines anschließenden ersten Überschubs 4 eine als korrekturbedürftig klassifizierte Lücke 11, die zuvor von der stromaufwärts verblockten Maschine 20 durch Ausleiten von Behältern erzeugt wurde. Die Lücke 11 wird im Eingangsbereich des ersten Überschubs 4 mithilfe der zugehörigen Überwachungseinheit 4a erkannt, indem die Länge der Lücke 11 ab dem ihr vorauslaufenden Behälter B1 gemessen wird.

Überschreitet der Abstand zum vorauslaufenden Behälter B1 einen vorgegebenen Wert, so wird die Lücke 11 als korrekturbedürftig klassifiziert und der erste Transporteur 3 zu einem geeigneten Zeitpunkt vorübergehend selektiv beschleunigt. Ein geeigneter Zeitpunkt ist beispielsweise gegeben, wenn der Lücke 11 nachlaufende Behälter B2, B3 auf dem ersten Transporteur 3 stehen und mit diesem gegenüber dem der Lücke 11 vorauslaufenden Behälter B1 beschleunigt werden können.

Das vorübergehende Beschleunigen des ersten Transporteurs 3 bewirkt eine Lückenverkürzung 12 am stromabwärts davon ausgebildeten Überschub 4 und eine kompensatorische Lückenbildung 13 am stromaufwärts davon ausgebildeten Überschub 2. Dieses kompensatorische Verteilen korrekturbedürftiger Lücken 11 im Behälterstrom kann sukzessive mit mehreren vorübergehend unterschiedlich schnell laufenden Transporteuren 3, 5, 7, 9 an den zugeordneten Überschüben ausgeführt werden.

Die Figur 2 zeigt einen Zustand, nachdem die nachlaufenden Behälter B2, B3 selektiv gegenüber dem vorauslaufenden Behälter B1 beschleunigt wurden, also nach der in der Figur 1 angedeuteten Lückenverkürzung 12. Von der ursprünglichen Lücke 11 ist demnach eine verkürzte Lücke 11a verblieben. Diese wird stromabwärts wiederum auf ihre Korrekturbedürftigkeit hin überprüft.

Durch das vorübergehende Beschleunigen des ersten Transporteurs 3 ist am eingangsseitigen Überschub 2 eine erste kompensatorische Lücke 14 entstanden. Die ursprünglich vorhandene korrekturbedürftige Lücke 11 wird somit auf die verkürzte Lücke 11a und die erste kompensatorische Lücke 14 aufgeteilt. In dem in den Figuren 1 und 2 dargestellten Teilschritt wird die ursprünglich als korrekturbedürftig erkannte Lücke 11 somit partiell geschlossen.

Auch im Bereich des zweiten Überschubs 6 ist eine Überwachungseinheit 6a vorhanden, die den Behälterstrom in der gleichen Weise hinsichtlich des Auftretens korrekturbedürftiger Lücken überwacht, wie dies oben für den ersten Überschub 4 beschrieben ist. Wie die Figur 3 andeutet, wird auch die durch partiellen Lückenschluss verkürzte Lücke 11a im Bereich des zweiten Überschubs 6 noch als korrekturbedürftig erkannt. Folglich wird der zweite Transporteur 5 mit den darauf stehenden Behältern B2, B3 vorübergehend gegenüber dem dritten Transporteur 7 beschleunigt.

Ergänzend dazu wird auch der erste Transporteur 3 gegenüber dem dritten Transporteur 7 vorübergehend beschleunigt, allerdings mit einer geringeren Geschwindigkeitsdifferenz als der zweite Transporteur 5. Dadurch ergibt sich im Bereich des ersten Überschubs 4 und/oder im Bereich des eingangsseitigen Überschubs 2 wenigstens eine weitere kompensatorische Lückenbildung 13 resultierend in wenigstens einer zweiten kompensatorischen Lücke 15.

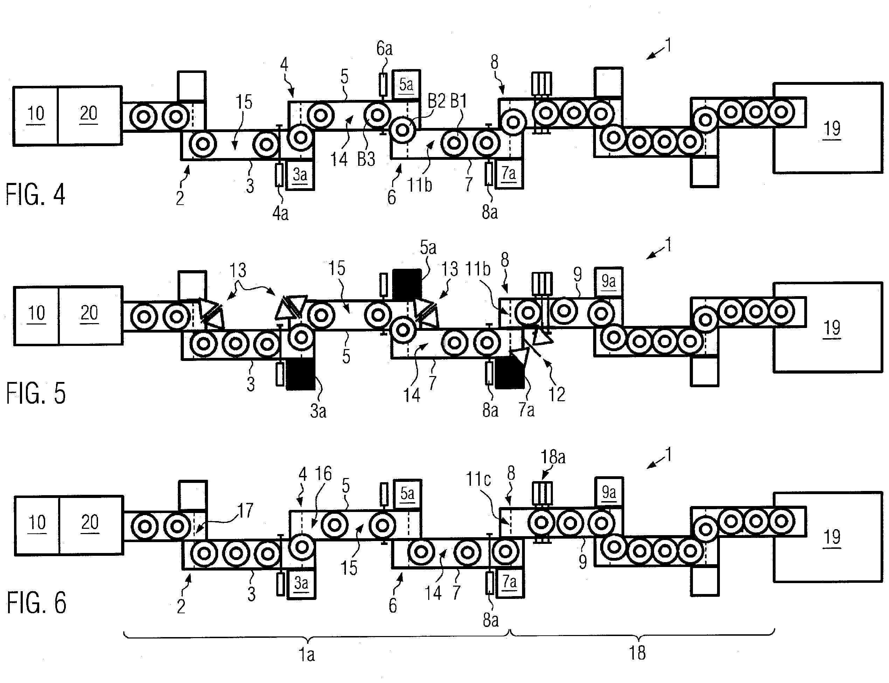

Der Zustand nach der vorübergehenden Beschleunigung des ersten und zweiten Transporteurs 3, 5 gegenüber dem dritten Transporteur 7 ist in der Figur 4 dargestellt. Demnach wurde aus der zuvor partiell geschlossenen Lücke 11a durch die erneute Lückenverkürzung 12 gemäß Figur 3 die demgegenüber weiter verkürzte Lücke 11b zwischen den Behältern B1 und B2.

Stromaufwärts der weiter verkürzten Lücke 11b sind im Behälterstrom die erste kompensatorische Lücke 14 und die zweite kompensatorische Lücke 15 zu erkennen. Die Längen der weiter verkürzten Lücke 11b und der kompensatorischen Lücken 14, 15 addieren sich zur Länge der ursprünglich vorhandenen korrekturbedürftigen Lücke 11.

Wie die Figur 5 andeutet, kann optional auch im Bereich des dritten Überschubs 8 eine Überwachung des Behälterstroms hinsichtlich des Auftretens korrekturbedürftiger Lücken durchgeführt werden, wie oben beschrieben. Es ist dann möglich, die verkürzte Lücke 11b bei Bedarf nochmals zu verkürzen und/ oder durch zusätzliche Lückenbildungen 13 weitere kompensatorische Lücken 16, 17 im Bereich des ersten Überschubs 4 und/ oder im Bereich des eingangsseitigen Überschubs 2 zu erzeugen. Hierzu werden die ersten drei Transporteure 3, 5, 7 gegenüber dem vierten Transporteur 9 in Anlehnung an das oben beschriebene Vorgehen vorübergehend auf unterschiedliche Transportgeschwindigkeiten beschleunigt.

Die Figur 6 deutet den Zustand nach der optionalen Erzeugung der kompensatorischen Lücken 16, 17 an, wobei die ursprünglich vorhandene Lücke weiterhin verkleinert wurde zur in den Staudruckbereich 18 einlaufenden endgültigen Lücke 11c. Wie Figur 6 erkennen lässt, wurde der Behälterstrom durch die vorübergehende Beschleunigung wenigstens des ersten Transporteurs 3 und des zweiten Transporteurs 5 durch Ausbildung wenigstens einer kompensatorischen Lücke 14 gegenüber dem in der Figur 1 dargestellten Behälterstrom im staudrucklosen Transportabschnitt 1a gleichmäßiger verteilt.

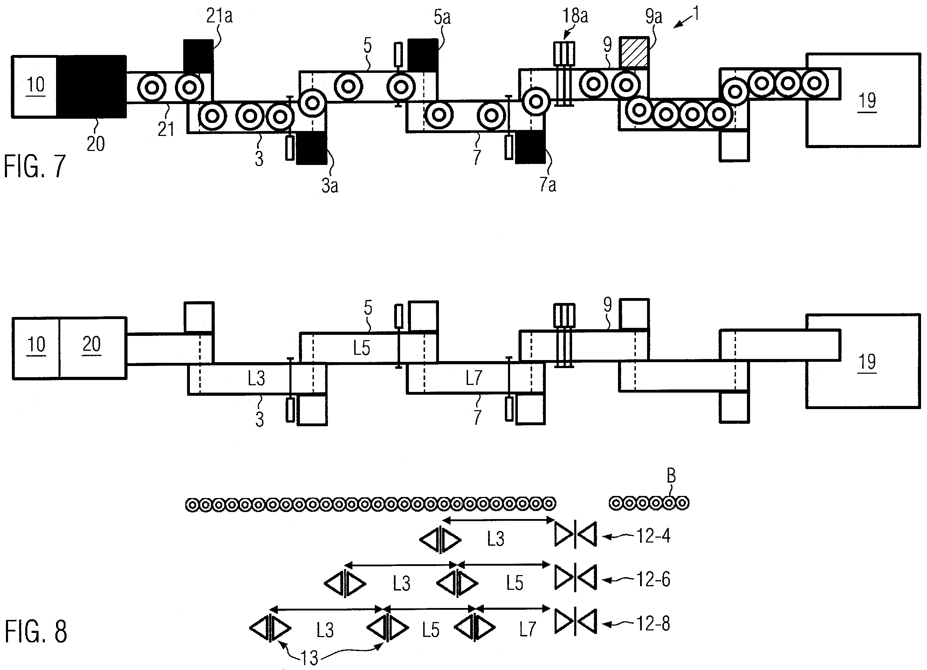

Die Figur 7 zeigt einen Zustand, bei dem die Ankunft der kompensatorisch verkleinerten endgültigen Lücke 11c mittels einer am Eingang zum Staudruckbereich 18 ausgebildeten Überwachungseinheit 18a, beispielsweise einer Lichtschranke, erkannt wird, um eine Aufholbewegung des nachfolgenden Behälterstroms durch gemeinsame vorübergehende Beschleunigung wenigstens der Transporteure 3, 5, 7 und der stromaufwärts verblockten Maschine 20 auszulösen.

Zu diesem Zweck laufen die ausleitende Maschine 20 mit ihrem Auslauftransporteur 21 und die Transporteure 3, 5, 7, gegebenenfalls auch der Transporteur 9, vorübergehend schneller als eine vorgegebene Grundgeschwindigkeit der ausleitenden Maschine 20. Dadurch werden alle auf den Transporteuren 3, 5, 7, 9 vorhandenen Lücken, also die kompensatorisch verkleinerte endgültige Lücke 11c und die dabei erzeugten kompensatorischen Lücken 14 bis 17 im Staudruckbereich 18 unter vollständigem Lückenschluss zusammen geschoben.

Durch diese Aufholbewegung wird gewährleistet, dass im Staudruckbereich 18 und der daran anschließenden Führungsmaschine 19 stets ausreichend Behälter B für die kontinuierliche Weiterverarbeitung des Behälterstroms vorhanden sind.

Die Grundgeschwindigkeit der ausleitenden Maschine 20 wird beispielsweise in Abhängigkeit von einer Ausleitrate der Maschine 20 eingestellt, so dass im Mittel ausreichend Behälter B in den Staudruckbereich 18 gefördert werden.

Dadurch, dass der vollständige Lückenschluss unter Einbeziehen der ausleitenden Maschine 20 erst nach der Erzeugung kompensatorischer Lücken erfolgt, kann die Aufholbewegung unter Einbeziehen sämtlicher Transporteure 3, 5, 7, 9 des staudrucklosen Transportabschnitts 1a auf einen vergleichsweise langen Zeitraum verteilt und folglich mit geringerem Geschwindigkeitshub bezogen auf die Grundgeschwindigkeit der Maschine 20 erfolgen.

Dadurch muss die Maschine 20 zur Durchführung der Aufholbewegung eine geringere Überkapazität im Sinne einer Geschwindigkeitsreserve aufweisen als dies bei einem herkömmlichen Lückenschluss nach dem Stand der Technik der Fall wäre. Auch lässt sich aufgrund des gleichmäßigeren Betriebs eine Grundgeschwindigkeit der Maschine 20 festlegen, die an ihre aktuelle Ausleitrate angepasst ist. Sinkt beispielsweise die Ausleitrate der Maschine 20, so kann diese mit einer geringeren Grundgeschwindigkeit betrieben werden, um den erforderlichen Behälterstrom zur Versorgung der Führungsmaschine 19 aufrecht zu erhalten. Steigt die Ausleitrate der Maschine 20, beispielsweise aufgrund einer schlechteren Produktqualität, so kann die Grundgeschwindigkeit der Maschine 20 zur Kompensation der gestiegenen Ausleitrate erhöht werden.

Vereinfacht gesprochen muss die ausleitende Maschine 20 im Gegensatz zu den bekannten Verfahren nicht mehr jede Beschleunigung der stromabwärts ausgebildeten Transporteure 3, 5, 7, 9 mitmachen, so dass die Anpassung der Grundgeschwindigkeit der ausleitenden Maschine 20 an die Ausleitrate und die Arbeitsgeschwindigkeit der Führungsmaschine 19 insgesamt vereinfacht wird und der Bedarf für Überkapazitäten zum Ausführen von Aufholbewegungen sinkt.

Die Figur 8 verdeutlicht, dass die sukzessive Erzeugung kompensatorischer Lücken dadurch begünstigt wird, dass die Transporteure 3, 5, 7 unterschiedliche Längen L3, L5, L7 aufweisen. Dadurch findet die Lückenbildung 13 an den Überschüben 4, 6, 8 an im Behälterstrom zueinander versetzten Stellen statt. Es wird somit vermieden, dass die Lückenbildung 13 bei aufeinanderfolgenden partiellen Lückenverkürzungen 12-4 am ersten Überschub 4, 12-6 am zweiten Überschub 6 und 12-8 am dritten Überschub 8 wiederholt an derselben Stelle im Behälterstrom erfolgt. Somit kann durch die Lückenerzeugung 13 keine kompensatorische Lücke entstehen, die größer ist als die ursprünglich vorhandene korrekturbedürftige Lücke 11.

Zu diesem Zweck sind vorzugsweise wenigstens drei aufeinander folgende Transporteure, beispielsweise die Transporteure 3, 5, 7, mit unterschiedlicher Länge L3, L5, L7 ausgebildet. Geeignete Längenverhältnisse der Transporteure 3, 5, 7 sind beispielsweise L3:L5:L7 gleich 6:5:4.

Das in den Figuren dargestellte Verfahren ließe sich prinzipiell auch durch Lückenerkennung am eingangsseitigen Überschub 2 in Kombination mit dem ersten Überschub 4 und dem zweiten Überschub 6 durchführen. In diesem Fall würde der Auslaufförderer 21 der ausleitenden Maschine 20 die zuvor beschriebene Funktion des ersten Transporteurs 3 übernehmen, der erste Transporteur 3 würde die Funktion des zweiten Transporteurs 5 übernehmen, usw.

Eine derartige Konfiguration wäre bei beengten Platzverhältnissen vorteilhaft. Allerdings kann der Auslauftransporteur 21 zur Lückenbildung 13 dann nur bedingt beschleunigt werden, da die Arbeitsgeschwindigkeit der ausleitenden Maschine 20 nur mit einem vergleichsweise geringen Geschwindigkeitshub gegenüber ihrer Grundgeschwindigkeit verändert werden soll. Auch wäre eine Anpassung der ausleitenden Maschine 20 an eine bestehende Ausleitrate eingeschränkt.

Nichtsdestoweniger lässt sich der für die Aufholbewegung zum endgültigen Lückenschluss nötige Geschwindigkeitshub durch die Erzeugung von kompensatorischen Lücken auch auf der Grundlage einer Kombination des ersten und zweiten Transporteurs 3, 5 mit dem Auslaufförderer 21 der die Lücken verursachenden Maschine 20 bewerkstelligen.

Somit wird ein insgesamt gleichmäßigerer Betrieb des Maschinenblocks bestehend aus der ausleitenden Maschine 20, dem Transportsystem 1 und der Führungsmaschine 19 ermöglicht. Ferner sinkt der Bedarf für Überkapazitäten der ausleitenden Maschine 20 zum Durchführen der nötigen Aufholbewegung auf den staudrucklosen Transporteuren 3, 5, 7, 9.

## Patentansprüche

1. Verfahren zum Steuern eines Behälterstroms, mit den Schritten:
a) Kontinuierlicher Transport von Behältern (B) ohne Staudruck auf mittels Überschüben (2, 4, 6, 8) aneinander gereihten Transporteuren (3, 5, 7, 9), die im Bereich der Überschübe nebeneinander verlaufen oder nicht überlappend in Reihe aufeinander folgen;
b) Überwachen des Behälterstroms mit berührungslosen Sensoren hinsichtlich des Auftretens korrekturbedürftiger Lücken (11) zwischen benachbarten Behältern (B1, B2), wobei unter den korrektbedürftigen Lücken Abstände zwischen den Behältern zu verstehen sind, die einen vorgebenen Maximalwert überschreiten;
c) Individuelle Ansteuerung der Transporteure zur selektiven Beschleunigung von Behältern (B2, B3), die einer im Schritt b) als korrekturbedürftig erkannten Lücke nachlaufen, so dass die Lücke verkleinert wird und dabei hinter den Behältern wenigstens eine kompensatorische Lücke (14) entsteht;
d) Vorübergehende gemeinsame Erhöhung der Transportgeschwindigkeiten von wenigstens zwei der Transporteure, wobei der Schritt d) nach dem Schritt c) ausgeführt wird, wobei unter einer gemeinsamen Erhöhung der Transportgeschwindigkeiten zu verstehen ist, dass die Transporteure gleichzeitig eine gegenüber einer Grundgeschwindigkeit erhöhte Transportgeschwindigkeit aufweisen, wobei die Transporteure dabei nicht zwangsläufig mit derselben Transportgeschwindigkeit laufen müssen; und
wobei die Transportgeschwindigkeiten im Schritt d) gemeinsam mit der Arbeitsgeschwindigkeit einer die Lücken verursachenden Maschine (20) erhöht werden.

2. Verfahren nach Anspruch 1, wobei die Arbeitsgeschwindigkeit gegenüber einer Grundgeschwindigkeit der Maschine (20) erhöht wird, die an eine aktuelle oder gemittelte Ausleitrate der Maschine (20) angepasst ist.

3. Verfahren nach einem der vorigen Ansprüche, wobei die Behälter (B) im Schritt a) auf wenigstens zwei, insbesondere drei, unterschiedlich langen Transporteuren (3, 5, 7) transportiert werden.

4. Verfahren nach wenigstens einem der vorigen Ansprüche, wobei sich die maximalen Transportgeschwindigkeiten der Transporteure (3, 5, 7, 9) im Schritt c) um 5 bis 50% unterscheiden.

5. Verfahren nach wenigstens einem der vorigen Ansprüche, wobei die Transportgeschwindigkeiten im Schritt c) zur zeitlich überlappenden Verkleinerung von wenigstens zwei erkannten Lücken (11) auf einen vorgegebenen Maximalwert begrenzt sind.

6. - Verfahren nach einem der vorigen Ansprüche, wobei der Behälterstrom einem an die Transporteure anschließenden Staudruckbereich (18) im Einlauf einer Führungsmaschine (19) zugeführt wird.

7. Verfahren nach Anspruch 6, wobei der Schritt d) vom Eintreffen der im Schritt c) verkleinerten Lücke (11c) am Staudruckbereich (18) ausgelöst wird.

8. Verfahren nach einem der vorigen Ansprüche, wobei im Schritt b) Abstände zwischen den Behältern (B1, B2) in Einlaufbereichen der Überschübe (4, 6, 8) gemessen werden und Lücken (11, 11a, 11b) ab einem vorgegebenen maximalen Abstand als korrekturbedürftig klassifiziert werden.

9. Verfahren nach wenigstens einem der vorigen Ansprüche, wobei der Behälterstrom wenigstens über einen ersten Überschub (4) von einem ersten zu einem zweiten Transporteur (3, 5) und über einen zweiten Überschub (6) von dem zweiten zu einem dritten Transporteur (7) verläuft und wenigstens am zweiten Überschub zum Erkennen der korrekturbedürftigen Lücken überwacht wird, und wobei im Schritt c) der erste und zweite Transporteur vorübergehend schneller laufen als der dritte Transporteur und der zweite Transporteur dabei vorübergehend schneller läuft als der erste Transporteur.

10. Verfahren nach einem der vorigen Ansprüche, wobei der Behälterstrom ferner am ersten Überschub (4) zum Erkennen korrekturbedürftiger Lücken überwacht wird und der erste Transporteur (3) im Schritt c) vorübergehend schneller läuft als der zweite Transporteur (5).

11. - Transportsystem (1) zum Durchführen des Verfahrens nach wenigstens einem der vorigen Ansprüche, mit:
- einem staudrucklosen Transportabschnitt (1a) umfassend mittels Überschub (4, 6, 8) verbundene Transporteure (3, 5, 7, 9), wobei wenigstens zwei der Transporteure unterschiedliche Längen (L3, L5, L7) aufweisen;
- einer an wenigstens einem Überschub ausgebildeten Überwachungseinheit (4a, 6a, 8a) zum Erkennen korrekturbedürftiger Lücken (11) im Behälterstrom; und
- einer Steuereinheit (10) zum Steuern der Transportgeschwindigkeiten der Transporteure, die so angepasst ist, dass sie die Schritte des Verfahrens nach wenigstens einem der vorigen Ansprüche ausführen kann.

12. Transportsystem nach Anspruch 11, wobei die Steuereinheit (10) ausgebildet ist, die Transporteure unterschiedlicher Länge zeitlich zumindest überlappend mit unterschiedlichen Transportgeschwindigkeiten laufen zu lassen.

13. Transportsystem nach Anspruch 11 oder 12, wobei der eingangsseitige Transporteur ein Auslauftransporteur (21) einer die Lücken verursachenden Maschine (20) ist.

14. Maschinenblock mit dem Transportsystem (1) nach einem der Ansprüche 11 bis 13 und mit einer die Lücken verursachenden Maschine (20) stromaufwärts des Transportsystems und mit einer Führungsmaschine (19) mit einem eingangsseitigen Staudruckbereich (18) stromabwärts des Transportsystems.

## Claims

1. A method for controlling a container flow, comprising the steps of:
a) continuous transportation of containers (B) without dynamic pressure on carriers (3, 5, 7, 9) that are arranged in rows by means of overlays
(2, 4, 6, 8) and that run next to each other in the area of the overlays or follow each other in a row in a non-overlapping manner;
b) monitoring the container flow with non-contact sensors
with regard to the occurrence of gaps (11) between adjacent containers (B1, B2) that require correction, wherein the gaps requiring correction are to be understood as meaning distances between the containers that exceed an assigned maximum value;
c) individual control of the carriers for the selective acceleration of containers (B2, B3) that are trailing behind a gap recognized as requiring correction in step b), so that the gap is reduced and at least one compensatory gap (14) is created behind the containers;
d) a temporary joint increase in the transport speeds of at least two of the carriers, wherein step d) being carried out after step c), a joint increase in the transport speeds being understood to mean that the carriers simultaneously have an increased transport speed compared to a basic speed, whereby the carriers do not necessarily have to run at the same transport speed; and
wherein the transport speeds in step d) are increased together with the operating speed of a machine (20) causing the gaps.

2. The method according to claim 1,
wherein the operating speed is increased with respect to a base speed of the machine (20), which is adapted to a current or averaged ejection rate of the machine (20).

3. The method according to one of the previous claims, wherein the containers (B) are transported in step a) on at least two, in particular three, carriers (3, 5, 7) of different lengths.

4. The method according to at least one of the previous claims, wherein the maximum transport speeds of the carriers (3, 5, 7, 9) in step c) differ by 5 to 50%.

5. The method according to at least one of the previous claims, wherein the transport speeds in step c) are limited to a predetermined maximum value for the temporally overlapping reduction of at least two detected gaps (11).

6. The method according to one of the previous claims, wherein the container stream is supplied to a back pressure area (18) following the carriers in the inlet of a guide machine (19).

7. The method according to claim 6,
wherein step d) is triggered by the arrival of the gap (11c), reduced in step c), at the back pressure area (18).

8. The method according to one of the previous claims, wherein in step b) distances between the containers (B1, B2) are measured in inlet regions of the overlays (4, 6, 8) and gaps (11, 11a, 11b) are classified as requiring correction from a predetermined maximum distance.

9. The method according to at least one of the previous claims, wherein the container flow passes at least over a first overlay (4) from a first to a second carrier (3, 5) and over a second overlay (6) from the second to a third carrier (7) and is monitored at least at the second overlay for detecting the gaps requiring correction, and wherein in step c) the first and second carrier run temporarily faster than the third carrier and the second carrier runs temporarily faster than the first carrier.

10. The method according to one of the previous claims, wherein the container stream is further monitored at the first overlay (4) for detecting gaps requiring correction and the first carrier (3) runs temporarily faster than the second carrier (5) in step c).

11. A transport system (1) for carrying out the method according to at least one of the previous claims, comprising:
- a zero-pressure accumulation transport section (1a) comprising carriers (3, 5, 7, 9) connected by means of overlay (4, 6, 8), wherein at least two of the carriers have different lengths (L3, L5, L7);
- a monitoring unit (4a, 6a, 8a) formed on at least one overlay for detecting gaps (11) in the container flow that require correction; and
- a control unit (10) for controlling the transport speeds of the carriers,
which is adapted to carry out the steps of the method according to at least one of the previous claims.

12. The transport system according to claim 11, wherein the control unit (10) is configured to
allow the carriers of different lengths to run at least overlapping in time at different transport speeds.

13. The transportation system according to claim 11 or 12, wherein the input-side carrier is an outlet carrier (21) of a machine (20) causing the gaps.

14. A machine block with the transport system (1) according to one of claims 11 to 13 and with a machine (20) causing the gaps upstream of the transport system and with a leading machine (19) with an input-side dynamic pressure area (18) downstream of the transport system.

## Revendications

1. Procédé de contrôle d'un flux de récipients, comprenant les étapes suivantes :
a) transport continu de récipients (B) sans pression dynamique sur des convoyeurs (3, 5, 7, 9), disposés en série au moyen d'unités de transfert (2, 4, 6, 8), qui se déplacent les uns à côté des autres dans la zone des unités de transfert ou se succèdent en série sans chevauchement ;
b) surveillance du flux de récipients avec des capteurs sans contact en ce qui concerne l'apparition d'écarts (11) entre des récipients adjacents (B1, B2) qui nécessitent une correction, dans lequel les écarts qui nécessitent une correction désignent des distances entre les récipients qui dépassent une valeur maximale prédéterminée ;
c) commande individuelle des convoyeurs pour l'accélération sélective des récipients (B2, B3) qui suivent un écart identifié à l'étape b) comme nécessitant une correction, de sorte que l'écart soit réduit et conjointement qu'au moins un écart compensatoire (14) soit créé derrière les récipients ;
d) augmentation temporaire conjointe des vitesses de transport d'au moins deux des convoyeurs, dans lequel l'étape d) est réalisée après l'étape c), dans lequel une augmentation conjointe des vitesses de transport signifie que les convoyeurs présentent simultanément une vitesse de transport qui est supérieure à une vitesse de base, dans lequel conjointement les convoyeurs ne doivent pas nécessairement fonctionner à la même vitesse de transport ; et
dans lequel les vitesses de transport à l'étape d) sont augmentées conjointement à la vitesse de travail d'une machine (20) provoquant les écarts.

2. Procédé selon la revendication 1, dans lequel la vitesse de travail est augmentée par rapport à une vitesse de base de la machine (20) qui est adaptée à un taux de décharge actuel ou moyen de la machine (20).

3. Procédé selon l'une des revendications précédentes, dans lequel les récipients (B) sont transportés à l'étape a) sur au moins deux, en particulier trois, convoyeurs (3, 5, 7) de longueurs différentes.

4. Procédé selon au moins l'une des revendications précédentes, dans lequel les vitesses de transport maximales des convoyeurs (3, 5, 7, 9) à l'étape c) diffèrent de 5 % à 50 %.

5. Procédé selon au moins l'une des revendications précédentes, dans lequel les vitesses de transport à l'étape c) sont limitées à une valeur maximale prédéterminée pour la réduction temporelle chevauchante d'au moins deux écarts détectés (11).

6. Procédé selon l'une des revendications précédentes, dans lequel le flux de récipients est amené à une zone de pression dynamique (18) adjacente aux convoyeurs à l'entrée d'une machine de guidage (19).

7. Procédé selon la revendication 6, dans lequel l'étape d) est déclenchée par l'arrivée de l'écart (11c) réduit à l'étape c) dans la zone de pression dynamique (18).

8. Procédé selon l'une des revendications précédentes, dans lequel, à l'étape b), les distances entre les récipients (B1, B2) dans les zones d'entrée des unités de transfert (4, 6, 8) sont mesurées et les écarts (11, 11a, 11b) à partir d'une distance maximale prédéterminée sont classés comme nécessitant une correction.

9. Procédé selon au moins l'une des revendications précédentes, dans lequel le flux de récipients s'écoule au moins via une première unité de transfert (4) d'un premier à un deuxième convoyeur (3, 5) et via une deuxième unité de transfert (6) du deuxième à un troisième convoyeur (7) et est surveillé au moins sur une deuxième unité de transfert pour détecter les écarts nécessitant une correction, et dans lequel à l'étape c) les premier et deuxième convoyeurs fonctionnent temporairement plus vite que le troisième convoyeur et conjointement le deuxième convoyeur fonctionne temporairement plus vite que le premier convoyeur.

10. Procédé selon l'une des revendications précédentes, dans lequel le flux de récipients est en outre surveillé sur la première unité de transfert (4) pour détecter des écarts nécessitant une correction, et le premier convoyeur (3) fonctionne temporairement plus rapidement que le deuxième convoyeur (5) à l'étape c).

11. Système de transport (1) pour la mise en œuvre du procédé selon au moins l'une des revendications précédentes, comprenant :
- une section de transport sans pression dynamique (1a) comprenant des convoyeurs (3, 5, 7, 9) reliés par des unités de transfert (4, 6, 8), dans lequel au moins deux des convoyeurs présentent des longueurs différentes (L3, L5, L7) ;
- une unité de surveillance (4a, 6a, 8a) formée sur au moins une unité de transfert pour détecter des écarts (11) dans le flux de récipients qui nécessitent une correction ; et
- une unité de commande (10) pour commander les vitesses de transport des convoyeurs, qui est adaptée pour réaliser les étapes du procédé selon au moins l'une des revendications précédentes.

12. Système de transport selon la revendication 11, dans lequel l'unité de commande (10) est conçue pour permettre aux convoyeurs de différentes longueurs de fonctionner temporairement au moins de manière chevauchante avec des vitesses de transport différentes.

13. Système de transport selon la revendication 11 ou 12, dans lequel le convoyeur côté entrée est un convoyeur de sortie (21) d'une machine (20) provoquant les écarts.

14. Bloc de machines avec le système de transport (1) selon l'une des revendications 11 à 13, avec une machine de création d'écart (20) en amont du système de transport et avec une machine de guidage (19) comportant une zone de pression dynamique côté entrée (18) en aval du système de transport.
